(19)

Europäisches
Patentamt
European
Patent Office
Office européen
des brevets

(11)  EP 3 747 910 A1

(12)  EUROPEAN PATENT APPLICATION

(43) Date of publication:
09.12.2020  Bulletin 2020/50

(51) Int Cl.:
C08B 1/04 (2006.01)        C08B 11/00 (2006.01)
C08B 11/193 (2006.01)

(21) Application number: 20178198.6

(22) Date of filing: 04.06.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority:  05.06.2019   JP 2019105123

(71) Applicant: Shin-Etsu Chemical Co., Ltd.
Tokyo 100-0004 (JP)

(72) Inventor: NARITA, Mitsuo
Niigata, 9428601 (JP)

(74) Representative: Schulz Junghans
Patentanwälte PartGmbB
Großbeerenstraße 71
10963 Berlin (DE)

(54)  PULVERIZED PULP AND METHOD OF PRODUCING CELLULOSE ETHER USING THE SAME

(57)     An object of the present invention is to provide a pulverized pulp in which the viscosity reduction caused by pulverization is mitigated and a method for producing cellulose ethers using such pulverized pulp. The above object is achieved by a pulverized pulp of being a pulverized product of a raw material pulp having a pH of 7.5 to 10.5 when measured by dispersing the raw material pulp in water, and having a percent decrease of 30% or less in viscosity caused by pulverization; and a method of producing a cellulose ether including reacting an alkali cellulose obtained from the pulverized pulp and an alkali metal hydroxide solution with an etherifying agent to obtain the cellulose ether.

EP 3 747 910 A1

**Description**

*Technical Field*

The present invention relates to pulverized pulp for use as a raw material for cellulose ethers and in other applications, as well as a method of producing cellulose ethers using such pulverized pulp.

Background Art

Pulverized pulp obtained by pulverizing raw material pulp has been used as a raw material for cellulose ethers and other industrial products.

For example, as described in Patent Documents 1 and 2, cellulose ethers may be produced by reacting alkali cellulose obtained from pulverized pulp and an alkali metal hydroxide solution with an etherifying agent. When pulverized pulp is used as a raw material for a cellulose ether, the resulting cellulose ether tends to have high transparency since the pulverized pulp has high fluidity and can uniformly mix with the alkali metal hydroxide solution.

Citation List

*Patent Documents*

Patent Document 1 JP 2001-354701 A
Patent Document 2 JP 2001-009316 A

Summary of the Invention

Technical Problem

According to studies of the approaches described in Patent Document 1 or 2 by the present inventors, the approaches have a problem that since pulverization causes the viscosity (i.e., degree of polymerization) of pulp to be decreased significantly, the resulting pulverized pulp would have undesirably low viscosity. When such pulverized pulp with decreased viscosity is used as a raw material for producing cellulose ethers, the viscosity of the aqueous solution of the pulp will be inappropriately decreased.

Accordingly, it is an object of the present invention to provide a pulverized pulp in which the viscosity reduction caused by pulverization is mitigated and a method of producing cellulose ethers using such pulverized pulp.

Solution to Problem

Over the course of our efforts to achieve the above-described objective, the present inventors focused on various characteristics of raw material pulp before pulverization. After numerous trials and failures while conducting experiments on various characteristics of raw material pulp, the present inventors have found that pulverized pulp obtained by pulverizing raw material pulp that has a pH within a predetermined range when measured by dispersing the pulp in water can mitigate the viscosity reduction during pulverization, and that such pulverized pulp can be used as a raw material for producing cellulose ethers to provide cellulose ethers with high viscosity. Based on these findings, the present inventors have succeeded in devising specific pulverized pulp, which is a pulverized product of raw material pulp having a pH within a predetermined range when dispersed in water and has a mitigated decrease in viscosity caused by pulverization, as well as a method of producing cellulose ethers using such pulverized pulp. The present invention has been completed on the basis of findings and successful examples that were first discovered by the present inventors.

Accordingly, the present invention provides pulverized pulp and methods of producing cellulose ethers as given by the following embodiments:

[1] a pulverized pulp comprising a pulverized product of a raw material pulp having a pH of 7.5 to 10.5 when measured by dispersing the raw material pulp in water, and wherein the pulverized product has a percent decrease of 30% or less in viscosity caused by pulverization, in comparison to the raw material pulp;
[2] the pulverized pulp according to [1] above, wherein the raw material pulp is a raw material pulp provided in the form of sheet or chips;

[3] the pulverized pulp according to [1] or [2] above, wherein the weight of the raw material pulp per unit area is in the range of 650 g/m$^2$ to 1,200 g/m$^2$;

[4] the pulverized pulp according to any one of [1] to [3] above, wherein the viscosity of the raw material pulp is in the range of 500 ml/g to 3,000 ml/g; and

[5] a method of producing a cellulose ether, including reacting an alkali cellulose obtained from the pulverized pulp according to any one of [1] to [4] above and an alkali metal hydroxide solution with an etherifying agent to obtain the cellulose ether.

Advantageous Effects of Invention

According to the present invention, pulverized pulp can be obtained in which the decrease in the viscosity resulting from pulverization is mitigated. The resulting pulverized pulp when used as a raw material for producing a cellulose ether can provide a cellulose ether with high viscosity.

Description of Embodiments

While pulverized pulp and a method of producing a cellulose ether according to one embodiment of the present invention will now be described in detail, the present invention can take various forms to the extent that its objective can be achieved.

Unless otherwise specified, each term used herein is used in the meaning commonly used by those skilled in the art and should not be construed to have any meaning that is unduly limiting. Also, any speculation or theory herein is made on the basis of the knowledge or experiences of the present inventors and as such, the present invention is not bound by any such speculations or theories.

The number of digits of an integer equals to the number of significant figures. For example, 1 has one significant figure and 10 has two significant figures. For a decimal number, the number of digits after a decimal point equals to the number of significant figures. For example, 0.1 has one significant figure and 0.10 has two significant figures.

The pulverized pulp according to one embodiment of the present invention is a pulverized product of a raw material pulp. The raw material pulp has a pH of 7.5 to 10.5 when measured by dispersing the pulp in water.

Examples of the raw material pulp includes non-wood based or wood based raw material pulps. Specific examples include cotton linter pulp and wood pulp. As used herein, the term "cotton linter pulp" refers to pulp obtained from fibers occurring in cotton seeds. As used herein, the term "wood pulp" refers to pulp obtained from wood.

The raw material pulp may be one produced by a method including commonly known digestion and bleaching steps. Examples of the production methods for the raw material pulp include the method described in JP 2013-227705 A. Specifically, chipped wood is used as a raw material, which is subjected to prehydrolysis and alkali digestion. The resulting pulp is bleached and then processed by the addition of a peroxide under acidic condition, followed by washing to give pulp for use as a raw material.

To obtain a material pulp that has a pH of 7.5 to 10.5 when measured by dispersing it in water, the water used in the final washing step of the production process of the raw material pulp is preferably weakly alkaline. Specifically, the pH of water used in the washing step is preferably in the range of 7.5 to 10.5, and more preferably in the range of 7.7 to 8.5.

The raw material pulp typically contains a few to approximately 10% by weight of moisture. The moisture content in the pulp can be determined by drying 2g of pulp pieces at 105°C for 1 hour or more and can be represented as the decrease in weight percent of the pulp.

While the raw material pulp can be classified into sheet pulp, chip pulp, cotton pulp and other pulp forms based on its shape, the sheet pulp and chip pulp are preferred in terms of availability or ease of handling. The sheet pulp is preferably a planar pulp sheet with a thickness of 3 mm or less. The chip pulp is pulp in the form of chips obtained by cutting sheet pulp using a known cutter such as slitter cutter. The chip pulp is preferably chip pulp having a length of 2 mm to 100 mm, and more preferably chip pulp having a length of 3 mm to 50 mm.

While the weight per unit area of the raw material pulp is not particularly limited, it is preferably in the range of 650 g/m$^2$ to 1200 g/m$^2$, and more preferably in the range of 700 g/m$^2$ to 1200 g/m$^2$ in terms of the ratio of the decrease in viscosity during pulverization and ease of handling as it is subjected to pulverization. The weight per unit area of the raw material pulp is determined by the determination of grammage according to ISO 536 described in Examples below.

While the viscosity of the raw material pulp is not particularly limited, it is, for example, in the range of 500 ml/g to 3,000 ml/g, preferably in the range of 700 ml/g to 2,500 ml/g, more preferably in the range of 1,000 ml/g to 2,500 ml/g, and still more preferably in the range of 1,300 ml/g to 2,300 ml/g in order to achieve highly viscous cellulose ethers by using the pulverized pulp according to one embodiment of the present invention. The viscosity of the raw material pulp and the pulverized pulp is determined by the viscosity measuring method according to ISO 5351 described in Examples below.

While the thickness of the raw material pulp is not particularly limited, it is, for example, in the range of 0.1 mm to 3.0 mm and preferably in the range of 0.5 mm to 2.5 mm. The apparent density of the raw material pulp is not particularly limited, either; it is, for example, in the range of 0.1 g/ml to 2.0 g/ml, and preferably in the range of 0.4 g/ml to 1.0 g/ml. The apparent density is calculated as the weight per unit area of the sheet pulp or the chip pulp divided by its thickness.

While the pH when measured by dispersing the raw material pulp in water is acceptable if it is in the range of 7.5 to 10.5, the pH is preferably in the range of 7.7 to 8.5 in order to facilitate the subsequent pulverization process of the raw material pulp and the production process of cellulose ethers. If a raw material pulp with the pH outside the range of 7.5 to 10.5 is pulverized, the decrease in viscosity resulting from the pulverization cannot be mitigated. Moreover, pulverizing a raw material pulp with the pH outside the range of 7.5 to 10.5 causes depolymerization and makes it difficult for the raw material pulp to maintain its high molecular weight. As a result, the viscosity of the cellulose ether may decrease.

In cases where the pH when measured by dispersing the raw material pulp in water is outside the range of 7.5 to 10.5, the pH can be adjusted to the above pH range by adding an alkaline compound or an aqueous solution of the alkaline compound to the raw material pulp.

The alkaline compound is not particularly limited; for example, alkali metal hydroxides, such as sodium hydroxide and potassium hydroxide, and salts such as sodium carbonate and sodium bicarbonate may be used. Of these, sodium bicarbonate is preferred as it is industrially used for pH adjustment and is relatively safe.

The method for adding the alkaline compound is not particularly limited; for example, spraying and mixing may be used. For example, the raw material pulp in the form of chips and the alkaline compound in the form of powder may be mixed together, or an aqueous solution of the alkaline compound may be sprayed onto the raw material pulp in the form of chips.

With regard to the raw material pulp, the "pH when measured by dispersing the raw material pulp in water" is determined by "Measurement of pH of Raw Material Pulp" described in Example below. In brief, crushed products obtained by crushing the raw material pulp in the form of sheet or chips is dispersed in water to form a dispersion and the pH of the dispersion at 20°C is measured to give a value for the "pH when measured by dispersing the raw material pulp in water." As used herein, the term "crush" is different from the term "pulverize" as used for processing the raw material pulp in the subsequent step and refers to a process requiring a weaker force than required by pulverization.

Typically, a pulverizer is used to pulverize the raw material pulp to obtain the pulverized pulp according to one embodiment of the present invention. The pulverizer used to pulverize the raw material pulp is not particularly limited; for example, knife mills, impact pulverizers, and vertical roller mills may be used.

When a pulverizer such as knife mill is used, the temperature of the pulverized pulp after pulverization at an outlet of the pulverizer, or the exhaust temperature, is, for example, from 20°C to 100°C, preferably from 30°C to 60°C , and more preferably from 40°C to 50°C since excessively low or high temperatures may alter the pulverized pulp.

The pH of the resulting pulverized pulp is preferably in the range of 7.5 to 10.5, and more preferably in the range of 7.7 to 8.5 in order to obtain cellulose ethers with high viscosity.

The pH of the pulverized pulp is determined by "Measurement Method for pH of Pulverized Pulp" described in Example below. In brief, pulverized pulp is dispersed in water and the pH of the dispersion at 20°C is measured.

By mitigating the decrease in viscosity caused by pulverization in the pulverized pulp according to one embodiment of the present invention, cellulose ethers with high viscosity can be produced. While the decrease equal to or less than 30% in viscosity caused by pulverization is acceptable, it is preferably 20% or less, more preferably 15% or less, and still more preferably 10% of less in order to achieve highly viscous cellulose ethers using the pulverized pulp according to one embodiment of the present invention. While the lower limit for the decrease in viscosity caused by pulverization is not particularly limited, it is typically 0%. If the decrease in viscosity is higher than 30%, then cellulose ethers with high viscosity may not be obtained when the pulverized pulp is used to produce cellulose ethers.

The decrease in viscosity caused by pulverization of raw material pulp is calculated from the following equation:

$$\text{(\%) Decrease in Viscosity} = 100 - (\text{Viscosity of Pulverized Pulp/ Viscosity of Raw Material Pulp}) \times 100$$

While the weight average particle size $D_{50}$ of the pulverized pulp according to one embodiment of the present invention is not particularly limited as long as the pH when measured by dispersing the raw material pulp in water and the decrease in viscosity caused by pulverization are within the above-specified ranges, it is preferably 1,000 $\mu$m or less, more preferably in the range of 60 $\mu$m to 500 $\mu$m, still more preferably in the range of 150 $\mu$m to 350 $\mu$m in terms of the decrease in fluidity of the pulverized pulp after pulverization and the difficulty of handling powder materials. The weight average particle size $D_{50}$ of the pulverized pulp according to one embodiment of the present invention is determined by "Measurement of Weight Average Particle Size $D_{50}$ of Pulverized Pulp" described in Examples below.

The method of producing cellulose ethers according to one embodiment of the present invention is characterized in that cellulose ethers with high viscosity can be achieved by using the pulverized pulp according to one embodiment of the present invention.

While the viscosity of the cellulose ether obtained by the method of producing cellulose ethers according to one embodiment of the present invention can vary depending on the viscosity of the used pulverized pulp according to one embodiment of the present invention and is not particularly limited, it is preferably higher than 8,000 mPa·s when measured by the viscosity of 1 wt% aqueous solution at 20°C, preferably 10,000 mPa·s or higher, and more preferably 15,000 mPa·s or higher in terms of its use as a thickener or in other applications. The upper limit for the viscosity is not particularly limited and is 50,000 mPa·s, for example. The viscosity of the cellulose ether is determined by "Measurement of Viscosity of Cellulose Ether" described in Examples below.

The method of producing cellulose ethers according to one embodiment of the present invention may employ any known methods of producing cellulose ethers as long as such methods use the pulverized pulp according to one embodiment of the present invention. Specifically, the method of producing a cellulose ether according to one embodiment of the present invention at least includes reacting an alkali cellulose obtained from the pulverized pulp according to one embodiment of the present invention and an alkali metal hydroxide solution with an etherifying agent to obtain the cellulose ether.

According to the method of producing a cellulose ether according to one embodiment of the present invention, the etherifying agent may be added after the pulverized pulp according to one embodiment of the present invention and the alkali metal hydroxide solution are mixed together, or alternatively, the etherifying agent may be added before the pulverized pulp according to one embodiment of the present invention and the alkali metal hydroxide solution are mixed together. Even when the etherifying agent is added before the pulverized pulp and the alkali metal hydroxide solution are mixed together, an alkali cellulose is generated from the pulverized pulp according to one embodiment of the present invention and the alkali metal hydroxide solution, and the alkali cellulose is then reacted with the etherifying agent to generate the cellulose ether.

The reaction for generating an alkali cellulose from the pulverized pulp and the alkali metal hydroxide solution and the reaction for generating a cellulose ether from the alkali cellulose and the etherifying agent may be performed either separately using individual reaction conditions or concurrently using the same reaction condition.

Examples of known methods of producing cellulose ethers include a method in which a desired amount of the alkali metal hydroxide solution is added dropwise or sprayed onto the pulverized pulp to bring the pulverized pulp and the alkali metal hydroxide solution into contact with each other to form an alkali cellulose, and the resulting alkali cellulose is then reacted with the etherifying agent.

The alkali metal hydroxide used in the step of obtaining an alkali cellulose is not particularly limited; for example, sodium hydroxide and potassium hydroxide may be used, with sodium hydroxide being preferred from an economic point of view. The concentration of the alkali metal hydroxide in the alkali metal hydroxide solution is preferably in the range of 10% to 60% by weight, and more preferably in the range of 30% to 50% by weight in terms of handling and efficiency of etherification reaction. While the solvent for dissolving the alkali metal hydroxide to obtain the alkali metal hydroxide solution is typically water, lower alcohols (preferably alcohols having 1 to 4 carbon atoms) and other inert solvents as well as any combination of these solvents may also be used.

The step of obtaining the alkali cellulose is preferably carried out while stirring the reaction mixture in a reactor equipped with an internal stirring mechanism in terms of the reactivity and safety. It is desired that the reactor is equipped with a measurement instrument to allow measurement of the internal temperature.

Preferably, the air within the reactor is removed by using, for example, a vacuum pump and replaced with an inert gas, preferably nitrogen, before the alkali metal hydroxide solution is contacted with the pulverized pulp since the depolymerization of cellulose that occurs in the presence of the alkali metal hydroxide and oxygen can be inhibited.

While the temperature at which the pulverized pulp is contacted with the alkali metal hydroxide solution is not particularly limited as long as the alkali cellulose is obtained, it is, for example, in the range of 10°C to 100°C, preferably in the range of 10°C to 80°C, and more preferably in the range of 30°C to 70°C in order to obtain a uniform alkali cellulose.

While the time when the pulverized pulp is contacted with the alkali metal hydroxide solution is not particularly limited as long as the alkali cellulose is generated, it is preferably in the range of 5 seconds to 30 minutes, and more preferably in the range of 10 seconds to 20 minutes in order to obtain a uniform alkali cellulose.

Stirring may be continued for additional 5 to 30 minutes following the addition of the alkali metal hydroxide solution in order to make the alkali cellulose more uniform.

An etherification reaction in which the alkali cellulose is reacted with the etherifying agent can be carried out in a known manner to produce a cellulose ether. Different cellulose ethers may be generated depending on the etherifying agent used, including, for example, alkyl cellulose, hydroxyalkyl cellulose, hydroxyalkylalkyl cellulose, and carboxymethyl cellulose.

Examples of the alkyl cellulose include methyl cellulose with a DS value (methoxy group) of 1.0 to 2.2 and ethyl cellulose with a DS value (ethoxy group) of 2.0 to 2.6. DS represents a degree of substitution, which is the average number of alkoxy groups per one unit of anhydrous glucose.

Examples of the hydroxyalkyl cellulose include hydroxyethyl cellulose with an MS value (hydroxyethoxy group) of 0.05 to 3.0 and hydroxypropyl cellulose with an MS value (hydroxypropoxy group) of 0.05 to 3.3. MS represents a molar substitution, which is the average number of moles of hydroxyalkoxy groups per one mole of anhydrous glucose. Both MS and DS can be determined from the results determined by using a quantification method described with respect to hypromellose in the Revised Japanese Pharmacopoeia Seventeenth Edition.

Examples of the hydroxyalkylalkyl cellulose include hydroxyethylmethyl cellulose with a DS value (methoxy group) of 1.0 to 2.2 and an MS value (hydroxyethoxy group) of 0.1 to 0.6; hydroxypropylmethyl cellulose with a DS value (methoxy group) of 1.0 to 2.2 and an MS value (hydroxypropoxy group) of 0.1 to 0.6; and hydroxypropylethyl cellulose with a DS value (ethoxy group) of 1.0 to 2.2 and an MS value (hydroxypropoxy group) of 0.1 to 0.6.

Also included in the examples of cellulose ether is carboxymethyl cellulose with a DS value (carboxymethoxy group) of 0.2 to 2.0.

The etherifying agent is properly selected depending of the type of cellulose ether to be produced and is not particularly limited. Examples include halogenated alkyls such as methyl chloride and ethyl iodide; alkylene oxides such as ethylene oxide and propylene oxide; and monochloroacetic acid.

The internal temperature of the reactor during the addition of the etherifying agent can be any suitable temperature that facilitates the reaction between the alkali cellulose and the etherifying agent and is not particularly limited. For example, the internal temperature is in the range of 30°C to 100°C, preferably in the range of 40°C to 90°C, and more preferably in the range of 50°C to 80°C in order to facilitate control of the reaction.

While the alkali cellulose and the etherifying agent may be blended by using any known method for blending two or more compounds, preferably, the etherifying agent is added to the alkali cellulose. The etherifying agent may be added preferably over a time period of 5 to 120 minutes, and more preferably over a time period of 10 to 90 minutes in order to facilitate control of the reaction and productivity.

In order to accomplish the etherification reaction in which the alkali cellulose is reacted with the etherifying agent to form the reaction mixture, preferably, stirring and mixing are continued even after the addition of the etherifying agent. The stirring time after the addition of the etherifying agent is for example sufficiently long for carrying out the etherification reaction and is preferably from 20 to 120 minutes, more preferably from 30 to 100 minutes to increase the productivity.

The internal temperature of the reactor during stirring after the addition of the etherifying agent can be any suitable temperature that facilitates the reaction and is not particularly limited. Preferably, the internal temperature is in the range of 80°C to 120°C, and more preferably in the range of 85°C to 100°C in order to facilitate control of the reaction.

While the resulting reaction mixture may be used as the final cellulose ether product, the mixture may be considered as a crude cellulose ether if it still contains significant amounts of impurities. In such a case, the reaction mixture may be purified by a technique similar to the common purification technique for crude cellulose ethers to give the final cellulose ether product.

In one exemplary purification method for crude cellulose ether, the reaction mixture is transferred to a vessel containing hot water, preferably hot water at 90°C or above, more preferably hot water in the range of 90°C to 98°C, and suspended in the hot water to dissolve salt side products. The resulting suspension is then subjected to a separation process. The separation process may be carried out by using, for example, a pressurized rotary filter, a filter press, and a suction filtration apparatus. The ash content of the cellulose ether after purification is preferably a predetermined amount or less, more preferably 5% by weight or less, and still more preferably 1% by weight or less. The ash content of the cellulose ether after purification can be determined by the measurement method for residues after strong heating described in the Japanese Pharmacopoeia Seventeenth Edition.

Preferably, the resulting cellulose ether is subjected to a drying process. The drying process may be any drying process that can evaporate moisture without altering the cellulose ether and is not particularly limited. Examples of such drying process include heat drying process, reduced pressure drying process, freeze-drying process, and air-drying process. Of these, particularly preferred is a heat drying process, more preferably, a heat drying process at 60°C to 90°C, as such a process is industrially readily performed. The heat drying process may be carried out in any suitable manner and is not particularly limited. For example, heat drying process using an air-blow dryer may be employed. The moisture content in the cellulose ether after the drying process may be any sufficiently small amount and is not particularly limited. For example, the moisture content is 10% by weight or less, preferably 5% by weight or less, and more preferably 2% by weight or less. The moisture content in the cellulose ether can be determined in a similar manner to the moisture content in the raw material pulp.

If desired, the dried cellulose ether may be pulverized using a common pulverizer, such as a ball mill, a roller mill, and an impact pulverizer. Subsequently, the pulverized cellulose ether may be classified through a sieve to adjust to a desired particle size.

Examples

While the present invention will now be described in further detail with reference to Examples and Comparative Examples, the present invention is not limited to what is described in these examples.

[Evaluation Method]

(1) Measurement of pH of Raw Material Pulp

A Wiley Crusher Model 1029AS (2mm screen diameter) manufactured by Yoshida Seisakusho Co., Ltd. was used as a crusher for crushing raw material pulp. A Model HM-30R pH meter manufactured by TOA DKK was used as a pH meter. Water to be used was boiled thoroughly and then allowed to cool without being exposed to air. The pH of water at 20°C immediately before use was from 6.9 to 7.1.

Raw material pulp in the form of chips was crushed by the crusher. Next, the crushed raw material pulp was dispersed in water in a 200 ml-Erlenmeyer flask with a ground joint stopper to form a 200 ml-dispersion containing 1.0% by weight of solid content. The flask was sealed and the dispersion was left for 10 minutes at 20°C with occasional shaking. The pH of the dispersion at 20°C was then measured. The solid content in the crushed raw material pulp was determined from the decrease in weight percent of the pulp after drying 2g of the crushed raw material pulp at 105 °C for over 1 hour.

(2) Measurement of pH of Pulverized Pulp

The pH of pulverized pulp was measured in the same manner as in the measurement method of the pH of raw material pulp, except that crushing was not performed and the solid content in the pulverized pulp was determined from the decrease in weight percent of the pulp after drying 2 g of the pulverized pulp at 105°C for over 1 hour.

(3) Measurement of Viscosity of Raw Material Pulp and Pulverized Pulp, and Measurement of Weight Per Unit Area of Raw Material Pulp

The viscosity was measured according to the viscosity measurement method in ISO 5351. The weight (mass) per unit area was measured according to the determination of grammage in ISO 536.

(4) Measurement of Viscosity of Cellulose Ether

The viscosity of a 1 wt% aqueous solution of cellulose ether at 20°C was measured by a Brookfield viscometer at 12 rpm.

(5) Measurement of Weight Average Particle Size $D_{50}$ of Pulverized Pulp

The weight average particle size $D_{50}$ of the pulverized pulp was determined in the following manner: Test sieves with different mesh sizes according to JIS Z8801 were mounted on a RO-TAP sieve shaker. The pulverized pulp was then loaded onto the top sieve and subjected to oscillation or tapping to sieve the pulverized pulp. The weight of the pulp on each sieve and the weight below the sieve was determined to give a weight-based distribution, which in turn was used to determine $D_{50}$ (cumulative 50% size).

(6) Measurement of DS and MS of Cellulose Ether

MS and DS were determined from the results determined according to a quantification method described with respect to hypromellose in the Revised Japanese Pharmacopoeia Seventeenth Edition.

[Preparation and Evaluation of Examples and Comparative Examples]

*Example 1*

Cotton linter pulp in the form of a sheet that had a pH of 7.5 when measured by dispersing it in water, a viscosity of 2,000 ml/g, and a weight per unit area of 700 g/m$^2$ was used as the raw material pulp.

The cotton linter pulp sheet before pulverization was cut into 10 × 10 mm chips. Subsequently, the cotton linter pulp chips were pulverized in a knife mill (HA-2542, manufactured by HORAI Tekkosho Co., Ltd., 0.5 mm screen diameter) to obtain pulverized pulp. The exhaust temperature at the outlet of the pulverizer during pulverization was 30°C. The resulting pulverized pulp had a weight average particle size $D_{50}$ of 250 $\mu$m and a viscosity of 1,400 ml/g. The pH when measured by dispersing the pulverized pulp in water was 7.5.

100 parts by weight of the pulverized pulp were placed in a reactor equipped with an internal stirrer. A vacuum was drawn to -95 kPa in the reactor and allowed to recover to atmospheric pressure using nitrogen. After this process was repeated twice, a vacuum was drawn to -95 kPa. 123 parts by weight of a 49 wt% aqueous solution of sodium hydroxide were then added to obtain an alkali cellulose. 80 parts by weight of methyl chloride and 21 parts by weight of propylene oxide were added and a reaction was carried out at 40°C to 100°C. Subsequently, the hydroxypropylmethyl cellulose product was purified with 95°C hot water until the ash content was approximately 1 wt% relative to the hydroxypropylmethyl cellulose. The resulting purified product was then dried in a blow-air drier at 80°C to obtain hydroxypropylmethyl cellulose with 1.2 wt% moisture content.

The resulting hydroxypropylmethyl cellulose had a degree of substitution (DS) with methoxy groups of 1.4, a molar substitution (MS) with hydroxypropoxy groups of 0.2, and a viscosity of 1 wt% aqueous solution at 20°C of 17,000 mPa·s.

*Example 2*

Pulverized pulp was obtained in a similar manner to Example 1, except that cotton linter pulp in the form of a sheet that had a pH of 8.0 when measured by dispersing it in water, a viscosity of 2,000 ml/g, and a weight per unit area of 700 g/m$^2$ was used as the raw material pulp, and the exhaust temperature at the outlet of the pulverizer during pulverization was 40°C. The resulting pulverized pulp had a weight average particle size $D_{50}$ of 250 $\mu$m and a viscosity of 1,800 ml/g. The pH when measured by dispersing the pulverized pulp in water was 8.0.

The resulting pulverized pulp was used to produce hydroxypropylmethyl cellulose in a similar manner to Example 1 to give a hydroxypropylmethyl cellulose that had a degree of substitution (DS) with methoxy groups of 1.4, a molar substitution (MS) with hydroxypropoxy groups of 0.2, and a viscosity of 1 wt% aqueous solution at 20°C of 20,000 mPa·s.

*Example 3*

Pulverized pulp was obtained in a similar manner to Example 1, except that cotton linter pulp in the form of a sheet that had a pH of 8.5 when measured by dispersing it in water, a viscosity of 2,000 ml/g, and a weight per unit area of 700 g/m$^2$ was used as the raw material pulp, and the exhaust temperature at the outlet of the pulverizer during pulverization was 40°C. The resulting pulverized pulp had a weight average particle size of 250 $\mu$m and a viscosity of 1,700 ml/g. The pH when measured by dispersing the pulverized pulp in water was 8.5.

The resulting pulverized pulp was used to produce hydroxypropylmethyl cellulose in a similar manner to Example 1 to give a hydroxypropylmethyl cellulose that had a degree of substitution (DS) with methoxy groups of 1.4, a molar substitution (MS) with hydroxypropoxy groups of 0.2, and a viscosity of 1 wt% aqueous solution at 20°C of 19,500 mPa·s.

*Example 4*

Pulverized pulp was obtained in a similar manner to Example 1, except that cotton linter pulp in the form of a sheet that had a pH of 9.0 when measured by dispersing it in water, a viscosity of 2,000 ml/g, and a weight per unit area of 700 g/m$^2$ was used as the raw material pulp, and the exhaust temperature at the outlet of the pulverizer during pulverization was 40°C. The resulting pulverized pulp had a weight average particle size of 250 $\mu$m and a viscosity of 1,600 ml/g. The pH when measured by dispersing the pulverized pulp in water was 9.0.

The resulting pulverized pulp was used to produce hydroxypropylmethyl cellulose in a similar manner to Example 1 to give a hydroxypropylmethyl cellulose that had a degree of substitution (DS) with methoxy groups of 1.4, a molar substitution (MS) with hydroxypropoxy groups of 0.2, and a viscosity of 1 wt% aqueous solution at 20°C of 19,000 mPa·s.

*Example 5*

Pulverized pulp was obtained in a similar manner to Example 1, except that cotton linter pulp in the form of a sheet that had a pH of 10.5 when measured by dispersing it in water, a viscosity of 2,000 ml/g, and a weight per unit area of 700 g/m$^2$ was used as the raw material pulp, and the exhaust temperature at the outlet of the pulverizer during pulverization was 40°C. The resulting pulverized pulp had a weight average particle size of 250 $\mu$m and a viscosity of 1,400 ml/g. The pH when measured by dispersing the pulverized pulp in water was 10.5.

The resulting pulverized pulp was used to produce hydroxypropylmethyl cellulose in a similar manner to Example 1 to give a hydroxypropylmethyl cellulose that had a degree of substitution (DS) with methoxy groups of 1.4, a molar substitution (MS) with hydroxypropoxy groups of 0.2, and a viscosity of 1 wt% aqueous solution at 20°C of 17,000 mPa·s.

*Example 6*

Pulverized pulp was obtained in a similar manner to Example 1, except that wood pulp in the form of a sheet that had a pH of 8.5 when measured by dispersing it in water, a viscosity of 1,300 ml/g, and a weight per unit area of 700 g/m$^2$ was used as the raw material pulp. The resulting pulverized pulp had a weight average particle size of 230 $\mu$m and a viscosity of 1,200 ml/g. The pH when measured by dispersing the pulverized pulp in water was 8.5.

The resulting pulverized pulp was used to produce hydroxypropylmethyl cellulose in a similar manner to Example 1 to give a hydroxypropylmethyl cellulose that had a degree of substitution (DS) with methoxy groups of 1.4, a molar substitution (MS) with hydroxypropoxy groups of 0.2, and a viscosity of 1 wt% aqueous solution at 20°C of 14,000 mPa·s.

*Example 7*

Cotton linter pulp in the form of a sheet that had a pH of 7.0 when measured by dispersing it in water, a viscosity of 2,000 ml/g, and a weight per unit area of 700 g/m$^2$ was cut into 10mm x 10mm chips, and 0.00025 parts by weight of sodium bicarbonate powder were added to and mixed with 1.00 parts by weight of the cotton linter pulp chips. The pH when measured by dispersing the resulting mixture in water was 9.0. Pulverized pulp was obtained in a similar manner to Example 1, except that the mixture of the cotton linter pulp in the form of chips and the sodium bicarbonate powder was used as the raw material pulp, and the exhaust temperature at the outlet of the pulverizer during pulverization was 40°C. The resulting pulverized pulp had a weight average particle size of 250 $\mu$m and a viscosity of 1,600 ml/g. The pH when measured by dispersing the pulverized pulp in water was 9.0.

The resulting pulverized pulp was used to produce hydroxypropylmethyl cellulose in a similar manner to Example 1 to give a hydroxypropylmethyl cellulose that had a degree of substitution (DS) with methoxy groups of 1.4, a molar substitution (MS) with hydroxypropoxy groups of 0.2, and a viscosity of 1 wt% aqueous solution at 20°C of 19,000 mPa·s.

*Example 8*

100 parts by weight of the pulverized pulp of Example 2 were placed in a reactor equipped with an internal stirrer. A vacuum was then drawn to -95 kPa in the reactor and allowed to recover to atmospheric pressure using nitrogen. After this process was repeated twice, a vacuum was drawn to -95kPa. 204 parts by weight of a 49 wt% aqueous solution of sodium hydroxide were then added to obtain an alkali cellulose. Hydroxypropylmethyl cellulose with 1.2 wt% moisture content was then obtained in a similar manner to Example 2, except that 186 parts by weight of methyl chloride and 26 parts by weight of propylene oxide were added.

The resulting hydroxypropylmethyl cellulose had a degree of substitution (DS] with methoxy groups of 1.8, a molar substitution (MS) with hydroxypropoxy groups of 0.15, and a viscosity of 1 wt% aqueous solution at 20°C of 20,000 mPa·s.

*Example 9*

100 parts by weight of the pulverized pulp of Example 2 were placed in a reactor equipped with an internal stirrer. A vacuum was then drawn to -95 kPa in the reactor and allowed to recover to atmospheric pressure using nitrogen. After this process was repeated twice, a vacuum was drawn to -95kPa. 135 parts by weight of a 49-wt% sodium hydroxide were then added to obtain an alkali cellulose. Hydroxyethylmethyl cellulose with 1.2 wt% moisture content was then obtained in a similar manner to Example 2, except that 108 parts by weight of methyl chloride and 19 parts by weight of ethylene oxide were added.

The resulting hydroxyethylmethyl cellulose had a degree of substitution (DS) with methoxy groups of 1.5, a molar substitution (MS) with hydroxyethoxy groups of 0.24, and a viscosity of 1 wt% aqueous solution at 20°C of 20,000 mPa·s.

*Comparative Example 1*

Pulverized pulp was obtained in a similar manner to Example 1, except that cotton linter pulp in the form of a sheet that had a pH of 7.0 when measured by dispersing it in water, a viscosity of 2,000 ml/g, and a weight per unit area of 700 g/m$^2$ was used as the raw material pulp, and the exhaust temperature at the outlet of the pulverizer during pulverization was 40°C. The resulting pulverized pulp had a weight average particle size $D_{50}$ of 250 $\mu$m and a viscosity of 1,200 ml/g. The pH when measured by dispersing the pulverized pulp in water was 7.0.

The resulting pulverized pulp was used to produce hydroxypropylmethyl cellulose in a similar manner to Example 1 to give a hydroxypropylmethyl cellulose that had a degree of substitution (DS) with methoxy groups of 1.4, a molar substitution (MS) with hydroxypropoxy groups of 0.2, and a viscosity of 1 wt% aqueous solution at 20°C of 14,000 mPa·s.

*Comparative Example 2*

Pulverized pulp was obtained in a similar manner to Example 1, except that cotton linter pulp in the form of a sheet that had a pH of 11.0 when measured by dispersing it in water, a viscosity of 2,000 ml/g, and a weight per unit area of 700 g/m$^2$ was used as the raw material pulp, and the exhaust temperature at the outlet of the pulverizer during pulverization was 40°C. The resulting pulverized pulp had a weight average particle size $D_{50}$ of 250 $\mu$m and a viscosity of 1,200 ml/g. The pH when measured by dispersing the pulverized pulp in water was 11.0.

The resulting pulverized pulp was used to produce hydroxypropylmethyl cellulose in a similar manner to Example 1 to give a hydroxypropylmethyl cellulose that had a degree of substitution (DS) with methoxy groups of 1.4, a molar substitution (MS) with hydroxypropoxy groups of 0.2, and a viscosity of 1 wt% aqueous solution at 20°C of 14,000 mPa·s.

*Comparative Example 3*

Pulverized pulp was obtained in a similar manner to Example 1, except that wood pulp in the form of a sheet that had a pH of 7.0 when measured by dispersing it in water, a viscosity of 1,300 ml/g, and a weight per unit area of 700 g/m$^2$ was used as the raw material pulp. The resulting pulverized pulp had a weight average particle size $D_{50}$ of 230 $\mu$m and a viscosity of 780 ml/g. The pH when measured by dispersing the pulverized pulp in water was 7.0.

The resulting pulverized pulp was used to produce hydroxypropylmethyl cellulose in a similar manner to Example 1 to give a hydroxypropylmethyl cellulose that had a degree of substitution (DS) with methoxy groups of 1.4, a molar substitution (MS) with hydroxypropoxy groups of 0.2, and a viscosity of 1 wt% aqueous solution at 20°C of 8,000 mPa·s.

*Comparative Example 4*

Pulverized pulp was obtained in a similar manner to Example 1, except that wood pulp in the form of a sheet that had a pH of 11.0 when measured by dispersing it in water, a viscosity of 1,300 ml/g, and a weight per unit area of 700 g/m$^2$ was used as the raw material pulp. The resulting pulverized pulp had a weight average particle size $D_{50}$ of 230 $\mu$m and a viscosity of 780 ml/g. The pH when measured by dispersing the pulverized pulp in water was 11.0.

The resulting pulverized pulp was used to produce hydroxypropylmethyl cellulose in a similar manner to Example 1 to give a hydroxypropylmethyl cellulose that had a degree of substitution (DS) with methoxy groups of 1.4, a molar substitution (MS) with hydroxypropoxy groups of 0.2, and a viscosity of 1 wt% aqueous solution at 20°C of 8,000 mPa·s.

The results for the resulting pulverized pulps and cellulose ethers are summarized in Table 1. As shown in Table 1, it was found that pulverized pulps in which the decrease in viscosity caused by pulverization is mitigated can be obtain by pulverizing the raw material pulps having a pH of 7.5 to 10.5 when measured by dispersing them in water. It also turned out that each of the cellulose ethers obtained by using these pulverized pulps as raw materials had a viscosity of 1 wt% aqueous solution at 20°C of 10,000 mPa·s or higher.

[Table 1]

| | Raw Material Pulp | | Pulverized Pulp Viscosity (ml/g) | Decrease in Viscosity (%) | Viscosity of 1 wt% aqueous solution of cellulose ether (mPa·s) |
|---|---|---|---|---|---|
| | pH | Viscosity (ml/g) | | | |
| Ex. 1 | 7.5 | 2,000 | 1,400 | 30 | 17,000 |
| Ex. 2 | 8.0 | 2,000 | 1,800 | 10 | 20,000 |
| Ex. 3 | 8.5 | 2,000 | 1,700 | 15 | 19,500 |
| Ex. 4 | 9.0 | 2,000 | 1, 600 | 20 | 19,000 |
| Ex. 5 | 10.5 | 2,000 | 1,400 | 30 | 17,000 |
| Ex. 6 | 8.5 | 1,300 | 1,200 | 8 | 14,000 |
| Ex. 7 | 9.0 | 2,000 | 1,600 | 20 | 19,000 |
| Ex. 8 | 8.0 | 2,000 | 1,800 | 10 | 20,000 |
| Ex. 9 | 8.0 | 2,000 | 1,800 | 10 | 20,000 |
| Comp.Ex. 1 | 7.0 | 2,000 | 1,200 | 40 | 14,000 |

(continued)

| | Raw Material Pulp | | Pulverized Pulp Viscosity (ml/g) | Decrease in Viscosity (%) | Viscosity of 1 wt% aqueous solution of cellulose ether (mPa·s) |
|---|---|---|---|---|---|
| | pH | Viscosity (ml/g) | | | |
| Comp.Ex. 2 | 11.0 | 2,000 | 1,200 | 40 | 14,000 |
| Comp.Ex. 3 | 7.0 | 1,300 | 780 | 40 | 8,000 |
| Comp.Ex. 4 | 11.0 | 1,300 | 780 | 40 | 8,000 |

Industrial Applicability

According to the pulverized pulp and the method of producing cellulose ethers according to one embodiment of the present invention, highly viscous cellulose ethers suitable for use as thickeners, gelling agents, and stabilizers used in the fields of building materials, personal care products, cosmetic products, food products, and other applications can be industrially produced.

**Claims**

1.  A pulverized pulp comprising a pulverized product of a raw material pulp having a pH of 7.5 to 10.5 when measured by dispersing the raw material pulp in water, and wherein the pulverized product has a percent decrease of 30% or less in viscosity caused by pulverization, in comparison to the raw material pulp.

2.  The pulverized pulp according to Claim 1, wherein the raw material pulp has a pH of 7.7 to 8.5 when measured by dispersing the raw material pulp in water.

3.  The pulverized pulp according to Claim 1 or 2, wherein the raw material pulp is a raw material pulp provided in the form of sheet or chips.

4.  The pulverized pulp according to anyone of the preceding Claims, wherein the raw material pulp is cotton linter pulp or wood pulp.

5.  The pulverized pulp according to anyone of the preceding Claims, wherein the weight of the raw material pulp per unit area is in the range of 650 g/m$^2$ to 1,200 g/m$^2$.

6.  The pulverized pulp according to anyone of the preceding Claims, wherein the weight of the raw material pulp per unit area is in the range of 700 g/m$^2$ to 1,200 g/m$^2$.

7.  The pulverized pulp according to any one of the preceding Claims, wherein the viscosity of the raw material pulp is in the range of 500 ml/g to 3,000 ml/g.

8.  The pulverized pulp according to any one of the preceding Claims, wherein the viscosity of the raw material pulp is in the range of 700 ml/g to 2,500 ml/g, particularly in the range of 1,000 ml/g to 2,500 ml/g, more particularly in the range of 1,300 ml/g to 2,300 ml/g.

9.  The pulverized pulp according to any one of the preceding Claims, wherein the thickness of the raw material pulp is in the range of 0.1 mm to 3.0 mm, particularly in the range of 0.5 mm to 2.5 mm.

10.  The pulverized pulp according to any one of the preceding Claims, wherein the apparent density of the raw material pulp is in the range of 0.1 g/ml to 2.0 g/ml, particularly in the range of 0.4 g/ml to 1.0 g/ml.

11.  The pulverized pulp according to any one of the preceding Claims, wherein the weight average particle size $D_{50}$ of the pulverized pulp is 1,000 $\mu$m or less, particularly in the range of 60 $\mu$m to 500 $\mu$m, more particularly in the range of 150 µm to 350 µm.

12. A method of producing a cellulose ether, comprising reacting an alkali cellulose obtained from the pulverized pulp according to any one of Claims 1 to 11 and an alkali metal hydroxide solution with an etherifying agent to obtain the cellulose ether.

Europäisches Patentamt

European Patent Office

Office européen des brevets

# EUROPEAN SEARCH REPORT

Application Number

EP 20 17 8198

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/36636 A1 (BKI HOLDING CORP [US]; HARDING ROGER BRUCE [US] ET AL.) 10 May 2002 (2002-05-10) * examples; tables * ----- | 1-12 | INV. C08B1/04 C08B11/00 C08B11/193 |
| X | EP 2 837 638 A1 (SHINETSU CHEMICAL CO [JP]) 18 February 2015 (2015-02-18) * examples * ----- | 1-12 | |

TECHNICAL FIELDS SEARCHED (IPC)

C08B

The present search report has been drawn up for all claims

| Place of search | Date of completion of the search | Examiner |
|---|---|---|
| Munich | 18 September 2020 | Vaccaro, Eleonora |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 17 8198

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2020

| Patent document cited in search report | | | Publication date | Patent family member(s) | | | Publication date |
|---|---|---|---|---|---|---|---|
| WO 0236636 | | A1 | 10-05-2002 | AR | 031183 | A1 | 10-09-2003 |
| | | | | AU | 2007002 | A | 15-05-2002 |
| | | | | BR | 0115388 | A | 04-01-2005 |
| | | | | CA | 2427698 | A1 | 10-05-2002 |
| | | | | CN | 1503807 | A | 09-06-2004 |
| | | | | EP | 1334132 | A1 | 13-08-2003 |
| | | | | JP | 4195289 | B2 | 10-12-2008 |
| | | | | JP | 2004536155 | A | 02-12-2004 |
| | | | | MX | PA03003856 | A | 20-04-2004 |
| | | | | US | 2002103368 | A1 | 01-08-2002 |
| | | | | US | 2005250940 | A1 | 10-11-2005 |
| | | | | WO | 0236636 | A1 | 10-05-2002 |
| EP 2837638 | | A1 | 18-02-2015 | CN | 104371028 | A | 25-02-2015 |
| | | | | EP | 2837638 | A1 | 18-02-2015 |
| | | | | JP | 6267078 | B2 | 24-01-2018 |
| | | | | JP | 2015057470 | A | 26-03-2015 |
| | | | | KR | 20150020072 | A | 25-02-2015 |
| | | | | TW | 201522450 | A | 16-06-2015 |
| | | | | US | 2015040798 | A1 | 12-02-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001354701 A
- JP 2001009316 A
- JP 2013227705 A

**Non-patent literature cited in the description**

- Revised Japanese Pharmacopoeia
- the Japanese Pharmacopoeia